(19) **Europäisches Patentamt**
**European Patent Office**
**Office européen des brevets**

(11) **EP 3 393 706 B1**

(12) **FASCICULE DE BREVET EUROPEEN**

(45) Date de publication et mention de la délivrance du brevet:
**11.03.2020 Bulletin 2020/11**

(21) Numéro de dépôt: **16820274.5**

(22) Date de dépôt: **22.12.2016**

(51) Int Cl.:
*B23K 26/362* (2014.01)     *B23K 26/26* (2014.01)
*B23K 26/322* (2014.01)     *B23K 101/00* (2006.01)
*B23K 101/18* (2006.01)     *B23K 101/34* (2006.01)
*B23K 103/04* (2006.01)     *B23K 103/00* (2006.01)

(86) Numéro de dépôt international:
**PCT/EP2016/082412**

(87) Numéro de publication internationale:
**WO 2017/109090 (29.06.2017 Gazette 2017/26)**

(54) **PROCEDE DE PREPARATION D'UNE TOLE PRE-REVETUE, AVEC ENLEVEMENT DU REVETEMENT A L'AIDE D'UN FAISCEAU LASER INCLINE ; TÔLE CORRESPONDANTE**

VERFAHREN ZUR HERSTELLUNG EINES VORBESCHICHTETEN METALLBLECHS UNTER ENTFERNUNG DER BESCHICHTUNG MITTELS EINES GENEIGTEN LASERSTRAHLS UND ENTSPRECHENDES METALLBLECH

METHOD FOR PRODUCING A PRE-COATED METAL SHEET, WITH REMOVAL OF THE COATING BY MEANS OF AN INCLINED LASER BEAM, AND CORRESPONDING METAL SHEET

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats de validation désignés:
**MA**

(30) Priorité: **22.12.2015 PCT/IB2015/059889**

(43) Date de publication de la demande:
**31.10.2018 Bulletin 2018/44**

(73) Titulaire: **Arcelormittal**
**1160 Luxembourg (LU)**

(72) Inventeur: **EHLING, Wolfram**
**9000 Gent (BE)**

(74) Mandataire: **Lavoix**
**2, place d'Estienne d'Orves**
**75441 Paris Cedex 09 (FR)**

(56) Documents cités:
WO-A1-2015/162478     JP-A- H0 839 279
KR-B1- 101 346 317     US-A- 5 662 762

**Description**

La présente invention concerne un procédé de préparation d'une tôle pré-revêtue en vue de son soudage à une autre tôle pré-revêtue, comprenant les étapes successives selon lesquelles :

- on approvisionne une tôle pré-revêtue comprenant un substrat métallique muni, sur l'une au moins de ses faces, d'une couche de pré-revêtement, puis
- on enlève, sur au moins une face de ladite tôle pré-revêtue, une partie au moins de ladite couche de pré-revêtement de sorte à former une zone d'enlèvement, ledit enlèvement étant réalisé au moyen de l'impact d'un faisceau Laser sur ladite couche de pré-revêtement, l'étape d'enlèvement comprenant, au fur et à mesure de l'enlèvement, le déplacement relatif dudit faisceau Laser par rapport à la tôle selon une direction d'avancement.

La demande de brevet EP 2 007 545 décrit un procédé de fabrication d'une pièce soudée à partir d'une tôle pré-revêtue d'un pré-revêtement, le pré-revêtement comprenant une couche d'alliage intermétallique surmontée d'une couche d'alliage métallique. Au cours de ce procédé, préalablement au soudage, afin de limiter la proportion du pré-revêtement fondue lors du soudage ultérieur, on retire à la périphérie de la tôle une partie au moins du pré-revêtement par ablation au moyen d'un faisceau Laser, tout en conservant au moins une partie de la couche d'alliage intermétallique afin d'assurer la protection des zones situées de part et d'autre du joint soudé contre la corrosion.

La publication KR 10-1346317 décrit un procédé au cours duquel un revêtement à base d'aluminium et de silicium est enlevé à la périphérie d'une tôle avant soudage. KR 10-1346317 enseigne d'incliner la tête du Laser par rapport à la verticale d'un angle compris entre 5° et 10° afin d'éviter que le faisceau réfléchi par la tôle ne frappe l'optique du Laser. KR 10-1346317 ne précise pas de quel côté la tête du Laser doit être inclinée par rapport à la direction de déplacement du Laser lors de l'enlèvement.

La demande de brevet WO 2015/162478 A1, base pour le préambule des revendications 1 et 25, décrit un procédé de préparation de tôles d'acier aluminiées destinées à être soudées puis durcies sous presse.

La demande de brevet JP H08 39279 A décrit un procédé d'irradiation par un faisceau laser.

La demande de brevet US 5 662 762 A décrit un procédé laser pour retirer un revêtement d'un substrat.

Partant de ces procédés, un objet de l'invention est de fournir un procédé de préparation d'une tôle pré-revêtue en vue de son soudage à une autre tôle pré-revêtue permettant d'obtenir un joint soudé présentant des propriétés mécaniques satisfaisantes pour une durée réduite d'ablation du pré-revêtement.

A cet effet, l'invention concerne un procédé de préparation d'une tôle pré-revêtue selon la revendication 1.

Selon des caractéristiques particulières, le procédé comprend une ou plusieurs des caractéristiques des revendications 1 à 24.

L'invention concerne également une tôle selon la revendication 25.

Selon des caractéristiques particulières, la tôle comprend une ou plusieurs des caractéristiques des revendications 26 et 27.

L'invention concerne également un procédé de fabrication d'un flan soudé selon les revendications 28 et 29.

L'invention concerne également un procédé de fabrication d'une pièce emboutie à chaud selon les revendications 30 et 31.

L'invention sera mieux comprise à la lecture de la description qui va suivre, donnée uniquement à titre d'exemple et faite en référence aux dessins annexés, sur lesquels :

- la figure 1 est une représentation schématique d'une tôle pré-revêtue de départ ;
- la figure 2 est une représentation schématique d'une tôle obtenue par le procédé de préparation ;
- la figure 3 est une représentation schématique d'une tôle;
- la figure 4 est une représentation schématique de l'étape d'enlèvement, c'est-à-dire d'ablation, du procédé de préparation ;
- la figure 5 est un graphique représentant la vitesse de traitement en fonction de l'angle d'inclinaison du faisceau Laser ;
- la figure 6 est une vue schématique transversale de la géométrie de la zone d'ablation, obtenue dans des conditions de l'invention lorsque le faisceau Laser est incliné avec un angle $\alpha$ compris entre 25° et 50° ; et

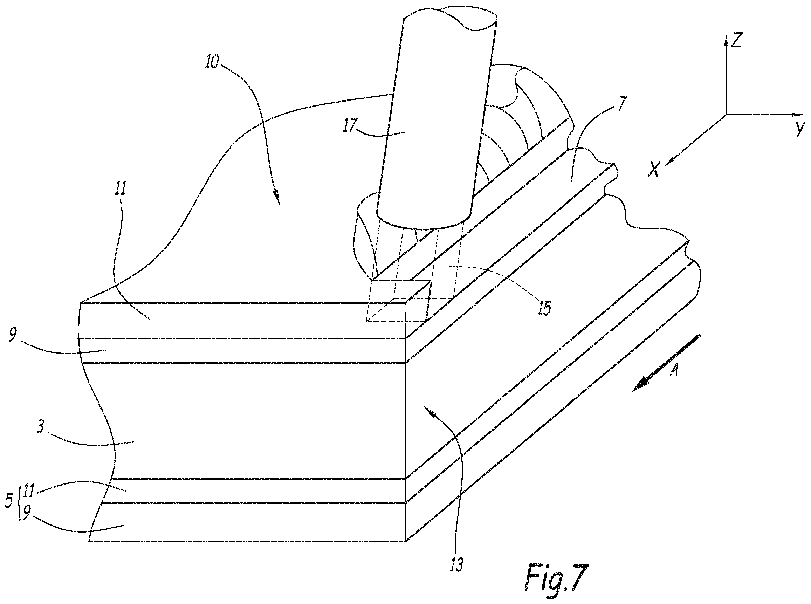

- la figure 7 est une représentation schématique en perspective de l'étape d'enlèvement du procédé de préparation.

L'invention concerne un procédé de préparation d'une tôle pré-revêtue en vue de son soudage à une autre pièce, en particulier à une deuxième tôle pré-revêtue préparée de manière analogue.

Le procédé selon l'invention comprend :

- la fourniture d'une tôle pré-revêtue de départ 1 comprenant un substrat métallique 3 muni, sur l'une au moins de ses faces, d'une couche de pré-revêtement 5 ; et

- l'enlèvement, sur au moins une face 10 de ladite tôle pré-revêtue de départ, d'une partie au moins de ladite couche de pré-revêtement 5.

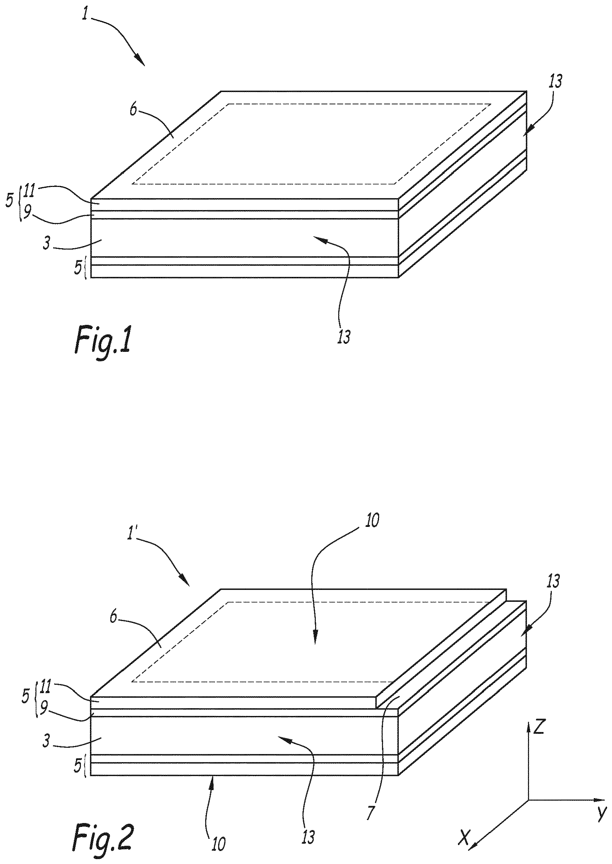

Sur la figure 1, on a représenté un exemple de tôle pré-revêtue de départ 1 fournie à l'étape de fourniture du procédé selon l'invention.

Dans le cadre de la présente invention, le terme tôle doit être entendu au sens large et désigne notamment toute bande ou tout objet obtenu par découpe à partir d'une bande, d'une bobine ou d'une feuille. Dans le cas particulier illustré sur la figure 1, cette tôle 1 comporte deux faces 10 et quatre bords 13. L'invention n'est cependant pas limitée à cette géométrie particulière.

Comme cela est illustré sur la figure 1, la tôle pré-revêtue 1 comprend un substrat métallique 3 muni, sur l'une au moins de ses faces, d'une couche de pré-revêtement 5 superposée au substrat 3 et en contact avec celui-ci.

Le substrat 3 est avantageusement un substrat réalisé en acier.

L'acier du substrat 3 est plus particulièrement un acier dont la microstructure est ferrito-perlitique.

Le substrat 3 est avantageusement un acier pour traitement thermique, en particulier un acier durcissable sous presse, et notamment un acier à base de manganèse et de bore, tel qu'un acier de type 22MnB5.

Selon un mode de réalisation, l'acier du substrat 3 comprend, en poids :

$0,10\% \le C \le 0,5\%$
$0,5\% \le Mn \le 3\%$
$0,1\% \le Si \le 1\%$
$0,01\% \le Cr \le 1\%$
$Ti \le 0,2\%$
$Al \le 0,1\%$
$S \le 0,05\%$
$P \le 0,1\%$
$B \le 0,010\%$

le reste étant constitué de fer et d'impuretés résultant de l'élaboration.

Plus particulièrement, l'acier du substrat 3 comprend, en poids :

$0,15\% \le C \le 0,25\%$
$0,8\% \le Mn \le 1,8\%$
$0,1\% \le Si \le 0,35\%$
$0,01\% \le Cr \le 0,5\%$
$Ti \le 0,1\%$
$Al \le 0,1\%$
$S \le 0,05\%$
$P \le 0,1\%$
$B \le 0,005\%$

le reste étant constitué de fer et d'impuretés résultant de l'élaboration.

En variante, l'acier du substrat 3 comprend, en poids :

$0,040\% \le C \le 0,100\%$
$0,80\% \le Mn \le 2,00\%$
$Si \le 0,30\%$
$S \le 0,005\%$
$P \le 0,030\%$
$0,010\% \le Al \le 0,070\%$
$0,015\% \le Nb \le 0,100\%$
$Ti \le 0,080\%$
$N \le 0,009\%$
$Cu \le 0,100\%$
$Ni \le 0,100\%$
$Cr \le 0,100\%$
$Mo \le 0,100\%$
$Ca \le 0,006\%,$

le reste étant constitué de fer et d'impuretés résultant de l'élaboration.

A titre d'exemple, le substrat métallique 3 est obtenu, en fonction de l'épaisseur désirée, par laminage à chaud, ou par laminage à froid suivi d'un recuit, ou par tout autre procédé d'obtention adapté.

Le substrat 3 présente avantageusement une épaisseur comprise entre 0,5 mm et 4 mm, et notamment environ égale à 1,5 mm.

La couche de pré-revêtement 5 est une couche obtenue au trempé, c'est-à-dire par immersion dans un bain de métal fondu. Elle comprend une couche d'alliage intermétallique 9 en contact avec le substrat 3 surmontée d'une couche d'alliage métallique 11.

La couche d'alliage intermétallique 9 résulte de la réaction entre le substrat 3 et le métal fondu du bain. Cette couche d'alliage intermétallique 9 comprend un composé intermétallique comprenant au moins un élément de la couche d'alliage métallique 11 et au moins un élément du substrat 3. Son épaisseur est généralement de l'ordre de quelques micromètres. En particulier, son épaisseur moyenne est typiquement comprise entre 2 et 7 micromètres.

La couche d'alliage métallique 11 présente une composition très voisine de la composition du métal fondu du bain. Elle résulte de l'entraînement d'une partie du métal fondu du bain par la bande lors de son déplacement à travers le bain. Son épaisseur est contrôlée au moyen d'organes de contrôle adaptés, disposés à la sortie du bain, et notamment au moyen de jets de gaz, et notamment d'air ou d'azote. Elle présente, par exemple, une épaisseur moyenne comprise entre 19 $\mu$m et 33 $\mu$m ou encore une épaisseur moyenne comprise entre 10 $\mu$m et 20 $\mu$m.

La couche de pré-revêtement 5 est plus particulièrement une couche d'aluminium, une couche d'alliage d'aluminium ou une couche d'alliage à base d'aluminium. Dans ce cas, la couche d'alliage intermétallique 9 comprend des composés intermétalliques de type $Fe_x\text{-}Al_y$, et notamment $Fe_2Al_5$.

Par alliage d'aluminium, on entend un alliage comprenant plus de 50% en poids d'aluminium.

Par alliage à base d'aluminium, on entend un alliage dont l'aluminium est le composant majoritaire en poids.

Selon un mode de réalisation, la couche de pré-revêtement 5 est une couche d'alliage d'aluminium comprenant en outre du silicium. A titre d'exemple, la couche d'alliage métallique 11 comprend, en poids :

- $8\% \leq Si \leq 11\%$
- $2\% \leq Fe \leq 4\%$,

le reste étant constitué d'aluminium et d'éventuelles impuretés.

La structure particulière de couches de pré-revêtement 5 obtenues par revêtement au trempé est décrite notamment dans la demande de brevet EP 2 007 545.

Avantageusement, et comme cela est représenté sur la figure 1, le substrat 3 est muni d'une telle couche de pré-revêtement 5 sur chacune de ses deux faces 10.

Avantageusement, la tôle pré-revêtue de départ 1 est obtenue par découpe, notamment par cisaillage ou par découpe Laser, à partir d'une bande pré-revêtue présentant les propriétés mentionnées ci-dessus.

Consécutivement à l'étape de fourniture, le procédé selon l'invention comprend l'enlèvement, sur au moins une face 10 de la tôle pré-revêtue de départ 1, d'une partie au moins de la couche de pré-revêtement 5 dans une zone d'enlèvement 7.

La figure 2 illustre une tôle obtenue après enlèvement.

Dans l'exemple représenté sur la figure 2, la zone d'enlèvement 7 est située à la périphérie 6 de la tôle pré-revêtue de départ 1.

Avantageusement, au cours de cette étape, on retire entièrement la couche d'alliage métallique 11.

L'enlèvement d'une partie au moins de la couche de pré-revêtement 5 est avantageux. En effet, en l'absence d'enlèvement, lors du soudage de la tôle pré-revêtue à une autre tôle, une partie de la couche de pré-revêtement 5 se retrouve diluée avec le substrat 3 au sein de la zone fondue, qui est la zone portée à l'état liquide pendant l'opération de soudage et qui se solidifie après cette opération de soudage en formant la liaison entre les deux tôles.

Deux phénomènes peuvent alors intervenir :

- selon un premier phénomène, une augmentation de la teneur en aluminium dans le métal fondu, résultant de la dilution d'une partie du pré-revêtement au sein de cette zone, conduit à la formation de composés intermétalliques. Ceux-ci peuvent être des sites d'amorçage de la rupture en cas de sollicitation mécanique.
- selon un second phénomène, l'aluminium, élément alphagène en solution solide dans la zone fondue, retarde la transformation en austénite cette zone lors de l'étape de chauffage précédant l'emboutissage à chaud. Dès lors, il n'est plus possible d'obtenir dans la zone fondue une structure complètement trempée après le refroidissement qui suit la mise en forme à chaud, et le joint soudé comporte de la ferrite. La zone fondue présente alors une dureté et une résistance mécanique en traction moindres que les deux tôles adjacentes.

Dans le cadre du procédé de préparation selon l'invention, on cherche donc à réduire la quantité d'éléments de la couche de pré-revêtement 5 susceptibles de se retrouver dans la zone fondue et d'influencer négativement ses propriétés mécaniques.

Les inventeurs de la présente invention ont constaté que des résultats satisfaisants sont obtenus en termes de propriétés mécaniques de la soudure, lorsque, pour une couche de pré-revêtement 5 à base d'aluminium, il subsiste, à l'issue de l'étape d'enlèvement, une partie de la couche de pré-revêtement 5 d'épaisseur moyenne au plus égale à environ 5 $\mu$m. Compte tenu de l'épaisseur moyenne de la couche d'alliage intermétallique 9 habituellement formée lors du revêtement au trempé d'une tôle d'acier par un pré-revêtement à base d'aluminium, cette épaisseur correspond à un enlèvement total de la couche d'alliage métallique 11 et à un enlèvement éventuellement partiel de la couche d'alliage intermétallique 9.

De préférence, au cours de cette étape d'enlèvement, on laisse subsister, au moins partiellement, la couche d'alliage intermétallique 9 sur toute la surface de la zone d'enlèvement 7. Avantageusement, à l'issue de cette étape, il subsiste une couche d'alliage intermétallique 9 d'épaisseur au moins égale à 1 $\mu$m.

La subsistance d'une partie au moins de la couche d'alliage intermétallique 11 dans la zone d'enlèvement 7 est avantageuse. En effet, dans la pratique, afin de tenir compte d'éventuelles fluctuations de la largeur de la zone fondue au cours de l'opération de soudage, la largeur de la zone d'enlèvement 7 est supérieure à la largeur de la zone fondue lors du soudage. Il subsiste donc, après l'opération de soudage, des régions de part et d'autre du joint soudé dans lesquelles la couche de pré-revêtement 5 a été retirée au moins en partie. Or, une fonction de la couche de pré-revêtement 5 à base d'aluminium est de protéger la tôle 1 contre la corrosion après emboutissage à chaud du joint soudé. Des études ont montré que, dans ces régions de la zone d'enlèvement 7 adjacentes au joint soudé, la subsistance d'une partie au moins de la couche d'alliage intermétallique 9 sur toute la surface de ces régions, permettait de conférer une protection suffisante contre la corrosion à l'assemblage soudé.

En particulier, on cherche à laisser subsister une couche d'alliage intermétallique d'épaisseur au moins égale à 1 $\mu$m en tout point de la zone 7 afin d'assurer une résistance à la corrosion satisfaisante de l'assemblage soudé dans les régions adjacentes au joint soudé.

En variante, il est possible d'enlever entièrement la couche d'alliage intermétallique 11 dans la zone d'enlèvement 7 dans des cas où la résistance à la corrosion est moins critique.

Selon l'invention, l'enlèvement au moins partiel de la couche de pré-revêtement 5 est réalisé au moyen d'un faisceau Laser 15 impactant la couche de pré-revêtement 5.

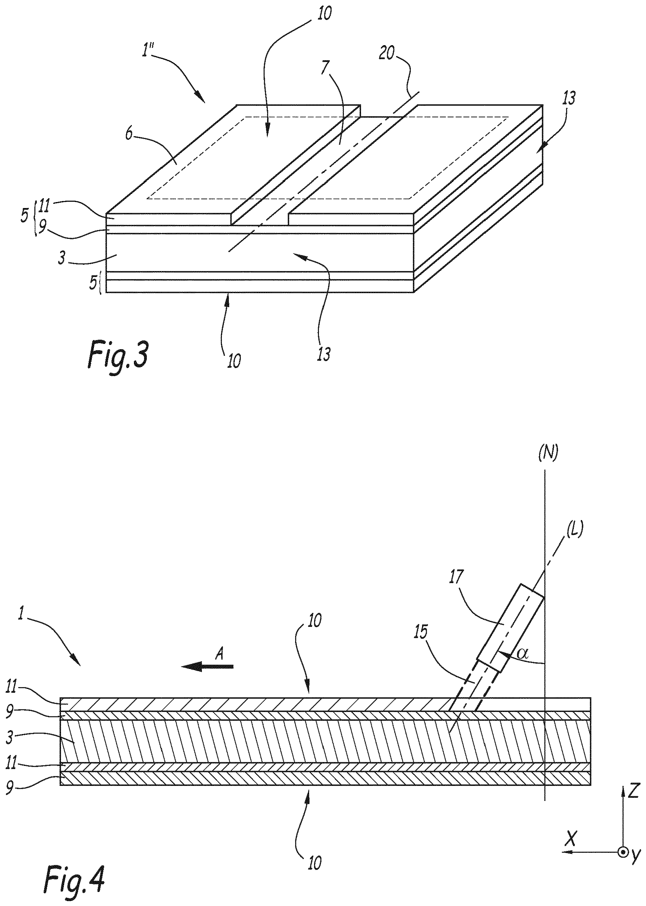

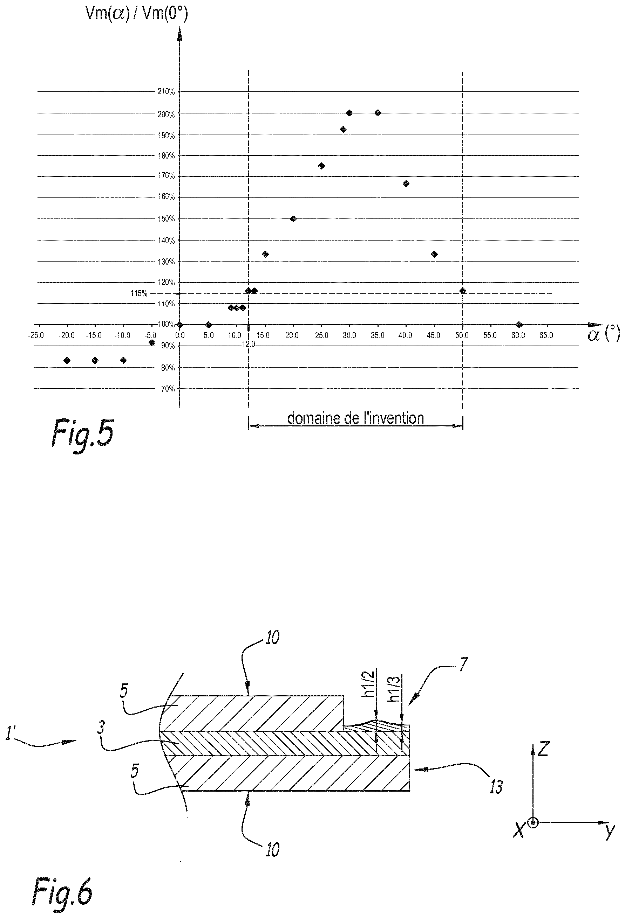

On a représenté schématiquement sur les figures 4 et 6, en vue de côté, l'étape d'enlèvement au moyen d'un faisceau Laser 15.

Le faisceau Laser 15 est émis par une tête Laser 17.

L'étape d'enlèvement comprend, au fur et à mesure de l'enlèvement, le déplacement relatif du faisceau Laser 15 par rapport à la tôle 1 selon une direction d'avancement Laser notée A. Cette direction d'avancement est illustrée par des flèches sur les figures 4 et 6.

Le déplacement relatif du faisceau Laser 15 selon la direction d'avancement A s'entend par exemple comme :

- un déplacement du faisceau Laser 15 selon la direction A, la tôle 1 restant fixe ; ou
- un déplacement de la tôle 15 selon la direction opposée à A, le faisceau Laser 15 restant fixe, ou
- un déplacement à la fois du faisceau Laser 15 selon A et de la tôle 1 selon la direction opposée à A.

A titre d'exemple, on utilise pendant l'étape d'enlèvement un faisceau Laser 15 présentant les caractéristiques suivantes :
Le faisceau Laser 15 présente avantageusement une section transversale rectangulaire ou carrée.

A titre d'exemple, le faisceau Laser 15 produit sur la face 10 de la tôle 1 à traiter une tâche focale de surface comprise entre 0,4 mm$^2$ et 3 mm$^2$, et avantageusement comprise entre 0,7 mm$^2$ et 1,5 mm$^2$.

Le Laser est de préférence un Laser pulsé, par exemple un Laser de type Q-switch, un Laser à fibre pulsé ou un Laser diode pulsé.

La durée d'impulsion est de l'ordre de la nanoseconde. Elle est notamment comprise entre 1 ns et 300 ns et de préférence entre 10 ns et 150 ns, encore plus avantageusement entre 30 ns et 80 ns.

La puissance nominale du faisceau Laser 15 est notamment comprise entre 200 W et 1,7 kW et de préférence entre 400 W et 1,7 kW.

De préférence, au cours de l'étape d'enlèvement, la distance de travail, correspondant à la distance entre la lentille de sortie de la tête Laser 17 et la face 10 à traiter de la tôle 1, est supérieure ou égale à 150 mm.

En effet, au cours de l'étape d'enlèvement, les projections résultant de l'ablation par le faisceau Laser 15 sont projetées jusqu'à une hauteur inférieure ou égale à 100 mm par rapport à la face 10 en cours de traitement. Cette hauteur de projection est même inférieure ou égale à 50 mm pour la majorité des projections. Par conséquent, une distance de travail supérieure ou égale à 150 mm permet d'éviter tout risque de pollution des lentilles de la tête laser par d'éventuelles projections résultat de l'ablation par le faisceau Laser 15. On notera que des projections sur des éléments de la tête Laser 17 localisés entre la lentille de sortie et la face 10 en cours de traitement, et notamment sur d'éventuels éléments de protection, destinés à protéger la lentille de sortie contre des projections, ne posent pas de problème dans le cadre du procédé selon l'invention.

Avantageusement, cette distance de travail est comprise entre 150 mm et 250 mm.

En effet, l'utilisation d'une distance de travail supérieure à 250 mm a notamment pour effet d'augmenter significativement les coûts de revient de l'étape d'enlèvement, dans la mesure où elle oblige à utiliser, dans l'optique du Laser, des lentilles non standard, et en particulier plus larges que les lentilles utilisées habituellement, ainsi qu'un nombre de lentilles plus élevé que le nombre de lentilles nécessaire lorsque la distance de travail est comprise dans la plage indiquée ci-dessus.

De préférence, cette distance de travail est comprise entre 190 mm et 215 mm.

Selon l'invention, au cours de l'étape d'enlèvement, le faisceau Laser 15 est orienté de manière particulière par rapport à la tôle 1.

L'orientation spécifique du faisceau Laser 15 pendant l'étape d'enlèvement est illustrée schématiquement sur la figure 4.

Les figures 1 à 6 ont été munies d'un repère (x, y, z) afin de faciliter la description des orientations dans la suite. Comme on pourra le constater, l'axe x de ce repère est orienté selon la direction d'avancement A du faisceau Laser 15. L'axe z du repère est dirigé selon l'épaisseur de la tôle 1 en étant orienté en partant de la mi-épaisseur du substrat 3 vers la surface d'ablation, c'est-à-dire vers le haut dans le cas où l'ablation est réalisée sur la face 10 supérieure de la tôle 1 et vers le bas lorsque l'ablation est réalisée sur la face 10 inférieure de la tôle 1. L'axe y du repère est orthogonal aux axes x et z, en étant orienté de sorte à former un repère direct avec ces deux axes x, z.

La face 10 inférieure est la face orientée vers le bas lors de la mise en œuvre de l'étape d'enlèvement. La face 10 supérieure est la face orientée vers le haut lors de la mise en œuvre de l'étape d'enlèvement.

Comme cela est illustré sur la figure 4, au cours de l'enlèvement, le faisceau Laser 15 est incliné d'un angle d'inclinaison $\alpha$ par rapport à la normale N à la face 10 de la tôle 1 sur laquelle on réalise l'enlèvement, ladite normale N étant prise dans la zone de la tôle 1 dans laquelle l'enlèvement a déjà été réalisé. Cet angle $\alpha$ est l'angle entre l'axe L du faisceau Laser 15 et la normale N à la face 10 de la tôle 1 sur laquelle on réalise l'enlèvement, ladite normale N étant prise dans la zone de la tôle 1 dans laquelle l'enlèvement a déjà été réalisé.

Cet angle d'inclinaison $\alpha$ est un angle aigu. Par angle aigu on entend un angle compris strictement entre 0° et 90°, les bornes étant exclues.

Le faisceau Laser 15 est en outre incliné de telle sorte que la projection orthogonale de l'axe du faisceau Laser 15 sur la face 10 de la tôle 1 en cours de traitement se situe dans la zone de la tôle 1 dans laquelle l'enlèvement a déjà été réalisé. Ainsi, le faisceau Laser 15 est émis vers l'avant selon la direction d'avancement A en direction de la face 10 de la tôle 1 à traiter. En d'autres termes, la tête d'émission 17 dudit faisceau Laser 15 est localisée à l'arrière, selon la direction d'avancement A, de la zone d'impact du faisceau Laser 15 sur la tôle 1.

Comme cela est illustré sur les figures 3 et 4, le faisceau Laser 15 forme un angle obtus avec la zone de la face 10 de la tôle 1 située en aval de la zone d'impact du faisceau Laser 15 selon la direction d'avancement A, c'est-à-dire avec la région de la tôle restant à traiter, et un angle aigu avec la zone de la face 10 de la tôle en amont de la zone d'impact du faisceau Laser 15, c'est-à-dire avec la région de la tôle restant à traiter.

On notera que l'axe L du faisceau Laser 15 est entièrement compris dans un plan normal à la face 10 de la tôle 1 en cours de traitement et comprenant la direction de déplacement A.

Selon l'invention, l'angle d'inclinaison $\alpha$ est compris entre 12° et 50°.

Dans le cadre de la présente invention, on définit, pour un angle d'inclinaison $\alpha$ donné du faisceau Laser 15, Vm comme la vitesse d'avancement du faisceau Laser 15 pour laquelle on retire l'ensemble de la couche d'alliage métallique 11 en laissant en place l'intégralité de la couche d'alliage intermétallique 9. Ainsi, pour des vitesses d'avancement strictement supérieures à Vm, il subsiste des parties de ladite couche d'alliage métallique 11 dans la partie 7.

Les inventeurs de la présente invention ont constaté, de manière surprenante, que lorsque l'on incline le faisceau Laser 15 selon l'orientation décrite ci-dessus pendant l'enlèvement, avec un angle d'inclinaison $\alpha$ compris entre 12° et 50°, la vitesse Vm (a) est supérieure d'au moins 15% à sa valeur pour un angle $\alpha$ égal à 0° (désignée par Vm(0°)), c'est-à-dire pour un faisceau Laser 15 sensiblement perpendiculaire à la face 10 en cours de traitement. L'angle $\alpha$ est donc défini par rapport à la direction N, normale par rapport à la surface de la tôle 1, comme l'indique la figure 4.

Ces résultats sont illustrés sur la figure 5, qui représente l'évolution du rapport Vm($\alpha$)/V(0°) en fonction de l'angle d'inclinaison $\alpha$ obtenue par des expériences réalisées par les inventeurs, qui seront expliquées plus en détail par la suite.

Ainsi, l'orientation précitée est avantageuse, car elle permet de mettre en œuvre une vitesse d'avancement du faisceau Laser 15 supérieure d'au moins 15% à la vitesse Vm admissible dans le cas conventionnel, dans lequel le faisceau Laser est orienté de manière perpendiculaire à la face 10 à traiter, tout en obtenant un résultat de qualité au moins identique en termes de qualité d'enlèvement. Or, une telle augmentation de la vitesse de déplacement résulte en une réduction de la durée de traitement de la tôle 1 et donc en une augmentation de l'efficacité du procédé, laquelle se traduit également en une réduction des coûts de production.

Avantageusement, l'angle d'inclinaison $\alpha$ est compris entre 15° et 45°. En effet, les inventeurs de la présente invention ont constaté que, dans cette plage d'angles d'inclinaison a, la vitesse Vm($\alpha$) est supérieure d'au moins 25% à sa valeur pour un angle $\alpha$ égal à 0°, c'est-à-dire pour un faisceau Laser 15 sensiblement perpendiculaire à la face 10 de la tôle 1 en cours de traitement. Cette plage préférée est plus avantageuse, puisqu'elle permet une réduction encore plus importante de la durée de traitement de la tôle 1.

Encore plus avantageusement, l'angle d'inclinaison $\alpha$ est compris entre 20° et 40°. En effet, les inventeurs de la présente invention ont constaté que, dans cette plage d'angles d'inclinaison a, la vitesse Vm($\alpha$) est supérieure d'au moins 40% à sa valeur pour un angle $\alpha$ égal à 0°, c'est-à-dire pour un faisceau Laser 15 sensiblement perpendiculaire à la face 10 de la tôle 1 en cours de traitement. Cette plage préférée est encore plus avantageuse, puisqu'elle permet une réduction encore plus importante de la durée de traitement de la tôle 1.

Ces résultats sont également illustrés sur la figure 5.

Encore plus avantageusement, l'angle d'inclinaison $\alpha$ est compris entre 25° et 35°. En effet, comme cela est représenté sur la figure 5, dans cette plage d'angles d'inclinaison a, la vitesse Vm($\alpha$) est supérieure d'au moins 75% à sa valeur pour un angle $\alpha$ égal à 0°, c'est-à-dire pour un faisceau Laser 15 sensiblement perpendiculaire à la face 10 de la tôle 1 en cours de traitement. Cette plage préférée est encore plus avantageuse, puisqu'elle permet une réduction encore plus importante de la durée de traitement de la tôle 1.

Comme cela est représenté sur la figure 5, pour des angles d'inclinaison $\alpha$ est compris entre 30° et 35°, la vitesse Vm($\alpha$) est égale à deux fois sa valeur pour un angle $\alpha$ égal à 0°.

Selon un mode de réalisation, on choisit pour réaliser l'enlèvement une vitesse environ égale à Vm de sorte que la couche d'alliage métallique 11 se trouve sensiblement entièrement enlevée dans la zone d'enlèvement 7 et que la couche d'alliage intermétallique 9 reste intacte.

En variante, on choisit une vitesse d'avancement de faisceau Laser 15 inférieure à Vm de sorte à retirer la couche d'alliage intermétallique 9 au moins partiellement sur toute la surface de la zone d'enlèvement 7. Dans ce cas, l'inclinaison du faisceau Laser 15 dans la plage décrite ci-dessus permet de choisir une vitesse d'avancement strictement supérieure à la vitesse d'avancement pour un faisceau Laser 15 normal à la face 10 à traiter pour un résultat d'enlèvement au moins identique.

A l'issue de l'étape d'enlèvement, on obtient une tôle préparée 1' telle qu'illustrée schématiquement sur la figure 2. Cette tôle 1' présente les caractéristiques suivantes.

Elle comprend un substrat métallique 3 revêtu, sur l'une au moins de ses faces 10, d'une couche de pré-revêtement 5 telle que définie précédemment, et présente, à sa périphérie 6, une zone d'enlèvement 7 dépourvue d'une partie au moins de la couche de pré-revêtement 5.

La tôle 1' est destinée à être accostée à une autre tôle, puis à être soudée en bout à bout selon un plan défini par le bord 13 de la tôle 1 situé au niveau de la zone 7.

La zone 7 présente par exemple une largeur comprise entre 0,8 mm et 3 mm et notamment entre 0,8 mm et 2 mm. Elle s'étend suivant au moins un bord 13 de la tôle 1.

Dans l'exemple illustré sur la figure 2, la couche d'alliage métallique 9 a été entièrement retirée dans la zone 7, en conservant une partie au moins de la couche d'alliage intermétallique 11 sur toute la surface de la zone 7. Plus particulièrement, la couche d'alliage intermétallique 11 reste intacte dans la zone 7. Dans ce cas, on a utilisé une vitesse d'avancement égale à Vm au cours de l'étape d'enlèvement.

En variante, la couche d'alliage métallique 9 est retirée entièrement dans la zone 7 et la couche d'alliage intermétallique 11 est retirée partiellement sur toute la surface de la zone 7.

Selon une autre variante, la couche d'alliage métallique 9 est retirée entièrement dans la zone 7 et la couche d'alliage intermétallique 11 est retirée totalement sur toute la surface de la zone 7.

Dans l'exemple illustré sur la figure 2, la zone d'enlèvement 7 s'étend à la périphérie de la tôle 6. Ainsi, elle s'étend dans une zone immédiatement contigüe au bord 13 de la tôle. Dans cet exemple, elle s'étend parallèlement au bord 13 sur toute la longueur dudit bord 13.

Selon la figure 3, la zone d'enlèvement 7 est localisée dans une zone non totalement contigüe au bord 13 de la tôle pré-revêtue. A titre d'exemple, elle s'étend parallèlement au bord 13 de la tôle sur toute la longueur dudit bord 13, à une distance non nulle prédéterminée dudit bord.

Selon cette variante, on découpe ensuite la tôle 1" ainsi obtenue selon un plan axial 20 perpendiculaire à celle-ci et coupant la zone d'enlèvement 7, par exemple en son milieu. Cette découpe est par exemple réalisée par refendage ou par découpe laser. On obtient alors une tôle 1' telle que représentée sur la figure 2.

A titre d'exemple, selon la variante, le plan axial 20 précité passe par le milieu de la zone d'enlèvement 7, et la largeur de la zone d'enlèvement 7 est supérieure de 20% à 40% à la largeur de la zone fondue qui serait obtenue par une opération de soudage réalisée selon le plan axial 20 précité. Avantageusement, la largeur de la zone d'enlèvement 7 est choisie de telle sorte qu'après une opération de soudage réalisée selon le plan axial 20 précité, il subsiste au moins 0,1 mm de zone d'enlèvement 7 de chaque côté de la zone fondue, pris suivant la largeur de la zone d'enlèvement 7.

En variante, la largeur de la zone d'enlèvement 7 est comprise entre 0,4 et 30mm. La valeur minimale de 0,4 mm correspond à une largeur permettant de réaliser, après découpe selon le plan axial 20, deux tôles présentant une zone d'enlèvement très étroite de 0,2 mm sur chacune des deux tôles. La valeur de 30 mm correspond à une largeur, d'enlèvement bien adaptée à des outils industriels pour un tel enlèvement. Une découpe ultérieure peut être effectuée, non pas sur le plan axial 20 situé au milieu de la zone d'enlèvement, mais à une localisation adaptée de façon à obtenir une tôle dont la largeur d'enlèvement est légèrement supérieure à la demi largeur de la zone fondue obtenue par une opération de soudage, définie par les conditions de l'invention.

Lorsque la tôle pré-revêtue 1 présente une couche de pré-revêtement 5 sur chacune de ses faces, l'étape d'enlèvement est avantageusement mise en œuvre sur chacune de ses faces, soit successivement, soit sensiblement simultanément, avec une tête d'ablation Laser 17 respective.

Dans ce cas, la tôle 1' présente une zone d'enlèvement 7 telle que définie précédemment sur chacune de ses faces 10, ces zones d'enlèvement 7 étant avantageusement situées en regard l'une de l'autre selon la normale N à la tôle 1'.

Selon un mode de réalisation, l'étape d'enlèvement du procédé de préparation d'une tôle pré-revêtue décrite ci-dessus est réalisée sans soufflage de gaz et/ou sans aspiration. En effet, l'utilisation de soufflage et/ou d'aspiration conjointement à une inclinaison du faisceau laser 15 telle que décrite ci-dessus risque de réduire la stabilité du procédé d'enlèvement. En particulier, l'aspiration et le soufflage se faisant selon des directions particulières, une erreur, même faible, dans le positionnement de la buse de soufflage ou de la buse d'aspiration risque de résulter en une absence d'ablation au moins localisée pour des vitesses d'ablation supérieures à $V_m(0)$.

Dans le cadre de la présente invention, les inventeurs ont réalisé les expériences suivantes, qui leur ont notamment permis d'obtenir la courbe illustrée sur la figure 5 précitée.

Ils sont partis de tôles 1 découpées à partir d'une bande en acier pré-revêtue au trempé dans un bain fondu d'un alliage d'aluminium comprenant 9,3% de silicium et 2,8% de fer, le reste étant constitué d'aluminium et d'impuretés inévitables. Ces tôles 1 comportent sur chacune de leurs faces, une couche de pré-revêtement 5 comprenant une couche d'alliage intermétallique 9 comprenant majoritairement $Fe_2Al_3$, $Fe_2Al_5$ et $Fe_xAl_ySi_z$ d'épaisseur environ égale à 5 micromètres d'épaisseur en contact avec le substrat 3 d'acier, surmontée par une couche 11 d'alliage métallique Al-Si d'épaisseur moyenne environ égale à 24 micromètres.

Le substrat 3 présente la composition suivante, en pourcentage en poids :

| C | Mn | Si | Al | Cr | Ti | B | N | S | P | Fe et impuretés inévitables |
|------|------|------|------|------|-------|-------|-------|-------|-------|-----------------------------|
| 0,22 | 1,16 | 0,26 | 0,03 | 0,17 | 0,035 | 0,003 | 0,005 | 0,001 | 0,012 | Reste |

La couche d'alliage métallique 11 a ensuite été enlevée par Laser sur une largeur d'environ 1,5 mm à partir du bord 13 des tôles 1 au moyen d'un faisceau Laser 15 orienté suivant différents angles d'inclinaison a, en laissant la couche d'alliage intermétallique 9 intacte.

L'enlèvement a été réalisé au moyen d'un Laser à fibre pulsé d'énergie nominale de 1000W délivrant des impulsions à une fréquence de 10 kHz et produisant une tâche focale d'environ 1 mm$^2$. La durée d'impulsion est environ égale à 70 ns.

Pour chaque angle d'inclinaison a, on a mesuré la vitesse $V_m$ correspondante.

Ces expériences ont permis d'obtenir la courbe de la figure 5, déjà analysée précédemment.

Des résultats analogues ont été obtenus par les inventeurs avec d'autres compositions de substrats 3, et notamment des substrats 3 présentant la composition suivante, en % en poids : $0.04\% \leq C \leq 0.1\%$, $0.3\% \leq Mn \leq 2\%$, $Si \leq 0.3\%$, $Ti \leq 0.08\%$, $0.015\% \leq Nb \leq 0,1\%$, $Al \leq 0.1\%$, $S \leq 0.05\%$, $P \leq 0.1\%$, Cu, Ni, Cr, Mo, inférieur à 0,1%, le reste étant du fer et des impuretés inévitables résultant de la fabrication,
ainsi qu'avec des substrats 3 tels que précisés ci-dessus, revêtus d'une couche de pré-revêtement 5 présentant la composition mentionnée ci-dessus, mais dont l'épaisseur totale de la couche de pré-revêtement est d'environ 35 micromètres.

Des résultats analogues ont également été obtenus par les inventeurs avec des lasers de type Q-switch.

On notera que la courbe de la figure 5 illustre également que l'effet technique avantageux obtenu par l'invention n'est pas obtenu lorsque le faisceau Laser 15 est incliné de telle sorte que sa projection orthogonale sur la face 10 en cours de traitement se trouve dans la zone de la face 10 restant à traiter et non dans la zone déjà traitée de cette face, correspondant à des angles d'inclinaison $\alpha$ négatifs.

Sans vouloir être liés par une théorie, les inventeurs de la présente invention proposent l'explication suivante aux effets avantageux constatés de l'inclinaison du faisceau Laser. Ils ont constaté que l'impact du faisceau Laser 15 sur la couche de pré-revêtement 5 résulte en une explosion du pré-revêtement au contact du faisceau Laser. Cette explosion créée la formation d'une vapeur métallique comportant en suspension des particules issues du pré-revêtement, à l'aplomb de la zone d'impact du faisceau Laser 15. Lorsque le faisceau Laser 15 est orienté perpendiculairement au plan de la face 10, c'est-à-dire lorsque α=0°, il doit traverser ce nuage de particules sur une hauteur importante et une partie de son énergie est dissipée dans le nuage avant tout impact utile avec le pré-revêtement à éliminer. Au contraire, lorsque le faisceau Laser 15 est incliné de la manière décrite ci-avant, il ne traverse pas ou en tout cas moins le nuage de particules, ce qui le rend plus efficace. Lorsque le faisceau Laser 15 est incliné de telle sorte que sa projection orthogonale sur la face 10 en cours de traitement se trouve dans la zone de la face 10 restant à traiter et non dans la zone déjà traitée de cette face, correspondant à des angles d'inclinaison négatifs, il doit également traverser le nuage de particules sur une hauteur importante et son efficacité se trouve donc diminuée de manière analogue au cas du faisceau 15 perpendiculaire au plan de la face 10 à traiter.

Dans le cadre des expériences réalisées, les inventeurs de la présente invention ont constaté que, lorsque le faisceau Laser 15 est incliné d'un angle d'inclinaison α compris entre 25° et 50°, la zone d'enlèvement 7 obtenue par ablation présente, quelle que soit la vitesse d'avancement du faisceau Laser 15, une homogénéité de surface importante.

A titre d'exemple, le tableau ci-dessous illustre les résultats d'expériences réalisées par les inventeurs de la présente invention.

| Vitesse d'avancement | Angle d'inclinaison α au-delà duquel on obtient une inhomogénéité d'épaisseur du pré-revêtement Δ ≤ 50% | Angle d'inclinaison α au-delà duquel on obtient une inhomogénéité d'épaisseur du pré-revêtement Δ ≤ 70% |
|---|---|---|
| 10 m/min | 22,5° | 20° |
| 11 m/min | 22,5° | 15° |
| 14 m/min | 25° | 0° |
| 17 m/min | 22,5° | 0° |

Dans ce tableau, Δ représente, pour une section transversale donnée à travers la zone d'enlèvement 7, prise perpendiculairement au bord 13 de la tôle 1' contigu à la zone 7, la différence relative entre :

- l'épaisseur de pré-revêtement restant au tiers de la largeur de la zone d'enlèvement 7, pris à partir d'un bord de la zone d'enlèvement 7 selon la largeur de ladite zone, ledit bord correspondant, dans cet exemple, au bord 13 de la tôle 1, notée $h_{1/3}$ ; et
- l'épaisseur de pré-revêtement restant à mi-largeur de la zone d'enlèvement 7, notée $h_{1/2}$.

La figure 6 présente une illustration schématique de ces paramètres.

Plus particulièrement, Δ est obtenue par application de la formule suivante :

$$\Delta(\%) = \frac{h_{1/2} - h_{1/3}}{h_{1/2}} \times 100 .$$

Ainsi, Δ constitue une mesure de l'homogénéité de l'épaisseur du pré-revêtement restant dans la zone d'enlèvement 7 à l'issue de l'étape d'enlèvement.

Dans ce qui précède, on entend par épaisseur de pré-revêtement, l'épaisseur de celui-ci dans la zone d'enlèvement 7 mesurée à partir du substrat 3 selon la direction normale à la face 10 de la tôle 1'.

Dans le tableau ci-dessus,

Δ ≤ 50% signifie que l'écart relatif est inférieur ou égal 50%.

Δ ≤ 70% signifie que l'écart relatif est inférieur ou égal 70%.

Après ablation avec faisceau incliné, on constate que $h_{1/2} > h_{1/3}$, (ou de manière équivalente : $h_{1/2} - h_{1/3} > 0$) c'est-à-dire que l'épaisseur du revêtement à mi-largeur est plus importante que celle obtenue en s'éloignant de cette position. Ainsi, Δ>0%.

Cependant, les expériences réalisées par les inventeurs ont montré que, sur la largeur de la zone d'enlèvement 7, on observe une différence Δ d'épaisseur de pré-revêtement inférieure ou égale à 50% quelle que soit la vitesse d'enlèvement utilisée lorsque l'angle d'inclinaison α est supérieur ou égal à 25°.

Au contraire, la différence Δ est plus élevée pour des angles d'inclinaison moins importants, l'épaisseur de pré-revêtement subsistant à mi-largeur étant typiquement au moins deux fois plus importante qu'au tiers de la largeur tel que défini ci-dessus.

En pratique, on constate que l'épaisseur $h_{1/3}$ du pré-revêtement ne varie que très peu avec l'inclinaison du faisceau Laser 15. L'amélioration de l'homogénéité de l'épaisseur de pré-revêtement subsistant dans la zone d'ablation 7 provient essentiellement d'une réduction de l'épaisseur de revêtement $h_{1/2}$ avec l'inclinaison du faisceau Laser 15, l'épaisseur $h_{1/2}$ se rapprochant de $h_{1/3}$ pour des inclinaisons croissantes du faisceau Laser 15.

Ainsi, la plage d'angles d'inclinaison $\alpha$ comprise entre 25° et 50° permet d'obtenir à la fois une productivité importante du procédé d'enlèvement et une très bonne homogénéité de l'épaisseur de pré-revêtement subsistant dans la zone d'enlèvement 7.

Cette très bonne homogénéité est avantageuse. En effet, une telle homogénéité permet de minimiser la teneur en aluminium dans le joint soudé, tout en assurant une bonne résistance à la corrosion au niveau des régions des tôles 1 immédiatement adjacentes au joint soudé en maximisant l'épaisseur de la couche d'alliage intermétallique 9 subsistant dans ces régions.

Comme cela a été expliqué précédemment, la plage d'angles d'inclinaison $\alpha$ comprise entre 20° et 40° permet d'obtenir une productivité encore meilleure. Ainsi, la plage d'angles d'inclinaison $\alpha$ comprise entre 25° et 40° est encore plus avantageuse, dans la mesure où elle permet d'obtenir une très bonne homogénéité de l'épaisseur de pré-revêtement subsistant dans la zone d'enlèvement 7 associée à une productivité encore améliorée du procédé d'enlèvement.

Ainsi, le procédé d'enlèvement selon l'invention permet d'obtenir dans ce cas des tôles 1', 1" telles que décrites précédemment, et pour lesquelles, dans la zone d'enlèvement 7, la variation relative $\Delta$, considérée suivant la largeur de la zone d'enlèvement 7, de l'épaisseur de la partie de la couche de pré-revêtement 5 subsistant dans la zone d'enlèvement 7, définie par le rapport entre la différence entre l'épaisseur de pré-revêtement à mi-largeur $h_{1/2}$ et l'épaisseur $h_{1/3}$ de pré-revêtement au tiers de la largeur prise à partir dudit bord de la zone d'enlèvement 7, et l'épaisseur du pré-revêtement à mi-largeur $h_{1/2}$ est strictement supérieure à 0% et inférieure ou égale à 50%.

L'invention concerne également un procédé de fabrication d'un flan soudé, comprenant :

- la fourniture d'au moins deux tôles 1' préparées selon le procédé décrit ci-dessus ;
- le soudage bout à bout de ces deux tôles 1', la liaison soudée étant effectuée sur le bord 13 comprenant la zone d'enlèvement 7 dans laquelle la couche de pré-revêtement 5 a été au moins partiellement retirée, et qui est en particulier dépourvue de couche d'alliage métallique 11.

Le procédé de soudage est avantageusement un procédé de soudage par Laser avec ou sans fil d'apport en fonction de la composition du substrat métallique et des propriétés mécaniques recherchées du joint soudé. En variante, il s'agit d'un soudage à l'arc électrique.

Les tôles 1' présentent des épaisseurs identiques. En variante, elles présentent des épaisseurs différentes.

A l'issue de ce procédé, on obtient un flan soudé comprenant deux tôles pré-revêtues soudées entre elles bout à bout.

Selon une variante, au cours de l'étape de fourniture, on fournit au moins deux tôles 1' obtenues à partir d'au moins une tôle 1" telle que décrite précédemment par découpe dans la zone d'enlèvement 7 de façon à obtenir une tôle 1' comprenant à sa périphérie une zone 7 dépourvue d'une partie au moins de la couche de pré-revêtement 5.

L'invention concerne également un procédé de fabrication d'une pièce comprenant successivement :

- la fourniture d'un flan soudé obtenu par le procédé décrit ci-dessus ;
- le chauffage du flan de manière à conférer une structure partiellement ou totalement austénitique aux substrats des tôles formant ledit flan ;
- la déformation dudit flan à chaud pour obtenir une pièce ; et
- le refroidissement de la pièce avec une vitesse propre à lui conférer des propriétés mécaniques visées.

Avantageusement, au cours de l'étape de refroidissement, la vitesse de refroidissement est supérieure à la vitesse critique de trempe martensitique.

La pièce ainsi fabriquée est, à titre d'exemple, une pièce de structure ou de sécurité pour un véhicule automobile.

Selon un mode de réalisation non représenté, on fournit au cours de l'étape de fourniture deux tôles pré-revêtues 1 telles que décrites ci-dessus et on les dispose côte à côte en laissant entre les deux tôles un jeu prédéterminé, puis, au cours de l'étape d'enlèvement, on enlève simultanément une partie au moins de la couche de pré-revêtement 5 de chacune des deux tôles 1 de sorte à former simultanément une zone d'enlèvement 7 sur chacune desdites tôles 1, le faisceau Laser 15 se trouvant à cheval sur les deux tôles 1 pendant l'étape d'enlèvement.

**Revendications**

**1.** Procédé de préparation d'une tôle pré-revêtue (1' ; 1") en vue de son soudage à une autre tôle pré-revêtue, comprenant les étapes successives selon lesquelles :

- on approvisionne une tôle pré-revêtue (1) comprenant un substrat métallique (3) muni, sur l'une au moins de ses faces (10), d'une couche de pré-revêtement (5), puis
- on enlève, sur au moins une face (10) de ladite tôle pré-revêtue (1), une partie au moins de ladite couche de pré-revêtement (5) de sorte à former une zone d'enlèvement (7), ledit enlèvement étant réalisé au moyen de l'impact d'un faisceau Laser (15) sur ladite couche de pré-revêtement (5), l'étape d'enlèvement comprenant, au fur et à mesure de l'enlèvement, le déplacement relatif dudit faisceau Laser (15) par rapport à la tôle (1) selon une direction d'avancement (A),

**caractérisé en ce que** lors de l'enlèvement, le faisceau Laser (15) est incliné par rapport à la face (10) de la tôle (1) de telle sorte que la projection orthogonale du faisceau Laser (15) sur ladite face (10) de la tôle (1) se situe dans la zone de la tôle (1) dans laquelle l'enlèvement a déjà été réalisé et qu'il forme avec la direction normale (N) à la face (10) de la tôle (1), un angle d'inclinaison (a) compris entre 12° et 50°.

2. Procédé selon la revendication 1, dans lequel la couche de pré-revêtement (5) est une couche d'aluminium, une couche à base d'aluminium ou une couche d'alliage d'aluminium.

3. Procédé selon l'une quelconque des revendications 1 ou 2, dans lequel la couche de pré-revêtement (5) est une couche d'alliage d'aluminium comprenant en outre du silicium.

4. Procédé selon l'une quelconque des revendications 1 à 3, dans lequel l'angle d'inclinaison (a) du faisceau Laser (15) est compris entre 15° et 45°.

5. Procédé selon l'une quelconque des revendications 1 à 4, dans lequel l'angle d'inclinaison (a) du faisceau Laser (15) est compris entre 20° et 40°.

6. Procédé selon l'une quelconque des revendications 1 à 5, dans lequel l'angle d'inclinaison (a) du faisceau Laser (15) est compris entre 25° et 40°.

7. Procédé selon l'une quelconque des revendications 1 à 6, dans lequel l'angle d'inclinaison (a) du faisceau Laser (15) est compris entre 25° et 35°.

8. Procédé selon l'une quelconque des revendications 1 à 7, dans lequel le faisceau Laser (15) est un faisceau laser pulsé.

9. Procédé selon l'une quelconque des revendications 1 à 8, dans lequel la couche de pré-revêtement (5) comprend une couche d'alliage intermétallique (9) surmontée d'une couche d'alliage métallique (11).

10. Procédé selon la revendication 9, dans lequel la zone d'enlèvement (7) est entièrement dépourvue de la couche d'alliage métallique (11).

11. Procédé selon l'une quelconque des revendications 1 à 10, dans lequel la zone d'enlèvement (7) est formée sur une face inférieure (10) de la tôle (1).

12. Procédé selon l'une quelconque des revendications 1 à 11, dans lequel une zone d'enlèvement (7) est formée simultanément sur une face inférieure (10) et sur une face supérieure (10) de la tôle (1).

13. Procédé selon l'une quelconque des revendications précédentes, dans lequel l'enlèvement est réalisé sans aspiration.

14. Procédé selon l'une quelconque des revendications précédentes, dans lequel l'enlèvement est réalisé sans soufflage de gaz.

15. Procédé selon l'une quelconque des revendications précédentes, dans lequel, au cours de l'étape d'enlèvement, la distance entre la lentille de sortie de la tête Laser (17) et la tôle (1) est supérieure ou égale à 150 mm, et en particulier comprise entre 150 mm et 250 mm.

16. Procédé selon l'une quelconque des revendications 1 à 15, dans lequel le substrat métallique (3) est constitué d'acier.

**17.** Procédé selon la revendication 16, dans lequel l'acier du substrat (3) comprend, en poids :

$0,10\% \le C \le 0,5\%$
$0,5\% \le Mn \le 3\%$
$0,1\% \le Si \le 1\%$
$0,01\% \le Cr \le 1\%$
$Ti \le 0,2\%$
$Al \le 0,1\%$
$S \le 0,05\%$
$P \le 0,1\%$
$B \le 0,010\%$

le reste étant constitué de fer et d'impuretés résultant de l'élaboration.

**18.** Procédé selon la revendication 16, dans lequel l'acier du substrat (3) comprend, en poids :

$0,15\% \le C \le 0,25\%$
$0,8\% \le Mn \le 1,8\%$
$0,1\% \le Si \le 0,35\%$
$0,01\% \le Cr \le 0,5\%$
$Ti \le 0,1\%$
$Al \le 0,1\%$
$S \le 0,05\%$
$P \le 0,1\%$
$B \le 0,005\%$

le reste étant constitué de fer et d'impuretés résultant de l'élaboration.

**19.** Procédé selon la revendication 16, dans lequel l'acier du substrat (3) comprend, en poids :

$0,040\% \le C \le 0,100\%$
$0,80\% \le Mn \le 2,00\%$
$Si \le 0,30\%$
$S \le 0,005\%$
$P \le 0,030\%$
$0,010\% \le Al \le 0,070\%$
$0,015\% \le Nb \le 0,100\%$
$Ti \le 0,080\%$
$N \le 0,009\%$
$Cu \le 0,100\%$
$Ni \le 0,100\%$
$Cr \le 0,100\%$
$Mo \le 0,100\%$
$Ca \le 0,006\%$,

le reste étant constitué de fer et d'impuretés résultant de l'élaboration.

**20.** Procédé selon l'une quelconque des revendications 16 à 19, dans lequel la microstructure dudit acier est ferrito-perlitique.

**21.** Procédé selon l'une quelconque des revendications 1 à 20, dans lequel, au cours de l'étape d'approvisionnement, on approvisionne deux tôles (1) pré-revêtues et on les dispose côte à côte en laissant entre les deux tôles pré-revêtues (1) un jeu prédéterminé, puis, au cours de l'étape d'enlèvement, on enlève simultanément une partie au moins de la couche de pré-revêtement (5) de chacune des deux tôles (1) pour former simultanément une zone d'enlèvement (7) sur chacune desdites tôles (1), le faisceau Laser (15) étant disposé à cheval sur les deux tôles (1) pendant l'étape d'enlèvement.

**22.** Procédé selon l'une quelconque des revendications 1 à 21, dans lequel la zone d'enlèvement (7) est située à la périphérie (6) de la tôle (1).

**23.** Procédé selon l'une quelconque des revendications 1 à 21, dans lequel la zone d'enlèvement (7) n'est pas totalement contigüe au bord (13) de la tôle (1).

**24.** Procédé selon la revendication 23, comprenant en outre, après l'étape d'enlèvement pour former la zone d'enlèvement (7), la découpe de la tôle (1") selon un plan (20) de façon à obtenir une tôle (1') comprenant à sa périphérie une zone (7) dépourvue d'une partie au moins de la couche de pré-revêtement (5).

**25.** Tôle (1',1") comprenant un substrat métallique (3) muni, sur l'une au moins de ses faces (10), d'une couche de pré-revêtement (5), la tôle (1') comprenant, sur ladite au moins une face (10), une zone d'enlèvement (7) au niveau de laquelle la couche de pré-revêtement (5) a été retirée sur une partie de son épaisseur, **caractérisée en ce que**, dans la zone d'enlèvement (7), la variation relative $\Delta$, considérée suivant la largeur de la zone d'enlèvement (7), de l'épaisseur de la partie de la couche de pré-revêtement (5) subsistant dans la zone d'enlèvement (7), définie par le rapport entre la différence entre l'épaisseur de pré-revêtement à mi-largeur ($h_{1/2}$) et l'épaisseur ($h_{1/3}$) de pré-revêtement au tiers de la largeur prise à partir du bord de la zone d'enlèvement (7), et l'épaisseur du pré-revêtement à mi-largeur ($h_{1/2}$) est strictement supérieure à 0% et inférieure ou égale à 50%, et dans laquelle la zone d'enlèvement (7) est située à la périphérie (6) de la tôle (1').

**26.** Tôle (1',1") selon la revendication 25, dans laquelle la couche de pré-revêtement (5) comprend une couche d'alliage intermétallique (9) surmontée d'une couche d'alliage métallique (11).

**27.** Tôle (1',1") selon la revendication 26, dans laquelle la zone d'enlèvement (7) est entièrement dépourvue de la couche d'alliage métallique (11).

**28.** Procédé de fabrication d'un flan soudé, comprenant les étapes successives selon lesquelles:

- on approvisionne au moins deux tôles (1') selon l'une quelconque des revendications 25 ou 26 ou fabriquées selon le procédé selon l'une quelconque des revendications 1 à 22 et 24, puis
- on soude bout à bout de ces deux tôles (1'), la liaison soudée étant effectuée sur le bord (13) comprenant la zone d'enlèvement (7).

**29.** Procédé de fabrication selon la revendication 28, dans lequel les deux tôles (1') soudées bout à bout présentent des épaisseurs différentes.

**30.** Procédé de fabrication d'une pièce emboutie à chaud comprenant les étapes successives selon lesquelles :

- on approvisionne un flan soudé obtenu par le procédé selon la revendication 28 ou selon la revendication 29, puis
- on chauffe ledit flan soudé de manière à conférer une structure partiellement ou totalement austénitique aux substrats (3) des tôles (1) formant ledit flan, puis
- on emboutit à chaud ledit flan pour obtenir une pièce emboutie à chaud;
- on refroidit la pièce avec une vitesse propre à lui conférer des propriétés mécaniques visées.

**31.** Procédé selon la revendication 30, dans lequel la vitesse de refroidissement est supérieure à la vitesse critique de trempe martensitique de l'acier du substrat (3) desdites au moins deux tôles (1') ou de l'acier du substrat (3) de ladite au moins une tôle (1").

**Patentansprüche**

**1.** Verfahren zur Erstellung eines vorbeschichteten Blechs (1'; 1") in Vorbereitung dessen Schweißens an ein anderes vorbeschichtetes Blech, aufweisend die sukzessiven Schritte, gemäß welchen:

- man ein vorbeschichtetes Blech (1) bereitstellt, dass ein metallisches Substrat (3) aufweist, das auf wenigstens einer seiner Flächen (10) mit einer Vorbeschichtungs-Schicht (5) versehen ist,
- man dann auf wenigstens einer Fläche (10) des vorbeschichteten Blechs (1) wenigstens einen Teil der Vorbeschichtungs-Schicht (5) wegnimmt, um einen Wegnahme-Bereich (7) zu bilden, wobei das Wegnehmen durchgeführt wird mittels Auftreffen-Lassens eines Laserstrahls (15) auf die Vorbeschichtungs-Schicht (5), wobei der Wegnehme-Schritt aufweist, in dem Maße des Wegnehmens, das relative Verlagern des Laserstrahls (15) bezüglich des Blechs (1) entlang einer Vorrückrichtung (A),

**dadurch gekennzeichnet, dass** während des Wegnehmens der Laserstrahl (15) bezüglich der Fläche (10) des Blechs (1) derart geneigt ist, dass die senkrechte Projektion des Laserstrahls (15) auf die Fläche (10) des Blechs (1) sich in dem Bereich des Blechs (1) befindet, in welchem das Wegnehmen bereits durchgeführt worden ist, und dass er mit der Normalen-Richtung (N) zur Fläche (10) des Werkstücks (1) einen Neigungswinkel ($\alpha$) bildet, der zwischen 12° und 50° liegt.

2. Verfahren gemäß Anspruch 1, wobei die Vorbeschichtungs-Schicht (5) eine Aluminiumschicht, eine Schicht auf Aluminiumbasis oder eine Schicht aus einer Aluminiumlegierung ist.

3. Verfahren gemäß irgendeinem der Ansprüche 1 oder 2, wobei die Vorbeschichtungsschicht (5) eine Schicht aus einer Aluminiumlegierung ist, die ferner Silizium aufweist.

4. Verfahren gemäß irgendeinem der Ansprüche 1 bis 3, wobei der Neigungswinkel (a) des Laserstrahls (15) zwischen 15° und 45° liegt.

5. Verfahren gemäß irgendeinem der Ansprüche 1 bis 4, wobei der Neigungswinkel (a) des Laserstrahls (15) zwischen 20° und 40° liegt.

6. Verfahren gemäß irgendeinem der Ansprüche 1 bis 5, wobei der Neigungswinkel (a) des Laserstrahls (15) zwischen 25° und 40° liegt.

7. Verfahren gemäß irgendeinem der Ansprüche 1 bis 6, wobei der Neigungswinkel (a) des Laserstrahls (15) zwischen 25° und 35° liegt.

8. Verfahren gemäß irgendeinem der Ansprüche 1 bis 7, wobei der Laserstrahl (15) ein gepulster Laserstrahl ist.

9. Verfahren gemäß irgendeinem der Ansprüche 1 bis 8, wobei die Vorbeschichtungs-Schicht (5) aufweist eine Schicht aus einer intermetallischen Legierung (9), die von einer Schicht aus einer metallischen Legierung (11) überlagert ist.

10. Verfahren gemäß Anspruch 9, wobei der Wegnahme-Bereich (7) gänzlich von der Schicht aus metallischer Legierung (11) befreit ist.

11. Verfahren gemäß irgendeinem der Ansprüche 1 bis 10, wobei der Wegnahme-Bereich (7) auf einer unteren Fläche (10) des Blechs (1) gebildet ist.

12. Verfahren gemäß irgendeinem der Ansprüche 1 bis 11, wobei ein Wegnahme-Bereich (7) zugleich auf der unteren Fläche (10) als auch auf der oberen Fläche (10) des Blechs (1) gebildet wird.

13. Verfahren gemäß irgendeinem der vorhergehenden Ansprüche, wobei das Wegnehmen ohne Absaugen durchgeführt wird.

14. Verfahren gemäß irgendeinem der vorhergehenden Ansprüche, wobei das Wegnehmen ohne Gasspülung durchgeführt wird.

15. Verfahren gemäß irgendeinem der vorhergehenden Ansprüche, wobei im Laufe des Wegnehme-Schritts der Abstand zwischen der Austrittslinse des Laser-Kopfs (17) und des Blechs (1) größer oder gleich 150 mm ist und insbesondere zwischen 150 mm und 250 mm liegt.

16. Verfahren gemäß irgendeinem der Ansprüche 1 bis 15, wobei das metallische Substrat (16) aus Stahl gebildet ist.

17. Verfahren gemäß Anspruch 16, wobei der Stahl des Substrats (3) aufweist in Gewicht:

0,10% ≤ C ≤ 0,5%
0,5% ≤ Mn ≤ 3%

0,1% ≤ Si ≤ 1%
0,01 ≤ Cr ≤ 1%
Ti ≤ 0,2%
Al ≤ 0,1%
S ≤ 0,05%
P ≤ 0,1%
B ≤ 0,010%

wobei der Rest aus Eisen und Verunreinigungen gebildet ist, die aus der Herstellung resultieren.

18. Verfahren gemäß Anspruch 16, wobei der Stahl des Substrats (3) aufweist in Gewicht:

0,15% ≤ C ≤ 0,25%
0,8% ≤ Mn ≤ 1,8%
0,1% ≤ Si ≤ 0,35%
0,01 ≤ Cr ≤ 0,5%
Ti ≤ 0,1%
Al ≤ 0,1%
S ≤ 0,05%
P ≤ 0,1%
B ≤ 0,005%

wobei der Rest aus Eisen und Verunreinigungen gebildet ist, die aus der Herstellung resultieren.

19. Verfahren gemäß Anspruch 16, wobei der Stahl des Substrats (3) aufweist in Gewicht:

0,040% ≤ C ≤ 0,100%
0,80% ≤ Mn ≤ 2,00%
Si ≤ 0,30%
S ≤ 0,005%
P ≤ 0,030%
0,010% ≤ Al ≤ 0,070%
0,015% ≤ Nb ≤ 0,100%
Ti ≤ 0,080%
N ≤ 0,009%
Cu ≤ 0,100%
Ni ≤ 0,100%
Cr ≤ 0,100%
Mo ≤ 0,100%
Ca ≤ 0,006%

wobei der Rest aus Eisen und Verunreinigungen gebildet ist, die aus der Herstellung resultieren.

20. Verfahren gemäß irgendeinem der Ansprüche 16 bis 19, wobei die Mikrostruktur des Stahls ferritisch-perlitisch ist.

21. Verfahren gemäß irgendeinem der Ansprüche 1 bis 20, wobei man im Laufe des Bereitstellen-Schritts zwei vorbeschichtete Bleche (1) bereitstellt und man diese nebeneinander anordnet, wobei man zwischen den beiden vorbeschichteten Blechen (1) ein vorbestimmtes Spiel belässt, man dann im Laufe des Wegnehme-Schritts zugleich wenigstens einen Teil der Vorbeschichtungs-Schicht (5) von jedem der Bleche (1) wegnimmt zum simultanen Bilden eines Wegnahme-Bereichs (7) an jedem der Bleche (1), wobei der Laserstrahl (15) während des Wegnehme-Schritts gleichermaßen an beiden Blechen (1) angeordnet ist.

22. Verfahren gemäß irgendeinem der Ansprüche 1 bis 21, wobei der Wegnahme-Bereich (7) am Umfang (6) des Blechs (1) angeordnet ist.

23. Verfahren gemäß irgendeinem der Ansprüche 1 bis 21, wobei der Wegnahme-Bereich (7) nicht gänzlich an den Rand (13) des Blechs (1) angrenzt.

**24.** Verfahren gemäß Anspruch 23, ferner aufweisend, nach dem Wegnehme-Schritt zum Bilden des Wegnahme-Bereichs (7), das Schneiden des Blechs (1") entlang einer Ebene (20), um ein Blech (1') zu erlangen, das an seinem Umfang einen Bereich (7) aufweist, der von wenigstens einem Teil der Vorbeschichtungs-Schicht (5) befreit ist.

**25.** Blech (1', 1"), aufweisend ein metallisches Substrat (3), das auf wenigstens einer seiner Flächen (10) mit einer Vorbeschichtungs-Schicht (5) versehen ist, wobei das Blech (1') auf der besagten wenigstens einen Fläche (10) einen Wegnahme-Bereich (7) aufweist, auf Höhe dessen die Vorbeschichtungs-Schicht (5) über einen Teil deren Dicke weggenommen worden ist, **dadurch gekennzeichnet, dass** im Wegnahme-Bereich (7), entlang der Breite des Wegnahme-Bereichs (7) gesehen, die relative Variation $\Delta$ der Dicke des Teiles der Vorbeschichtungs-Schicht (5), der im Wegnahme-Bereich (7) verbleibt, definiert durch das Verhältnis zwischen der Differenz zwischen der Vorbeschichtungs-Dicke auf Halber-Breite ($h_{1/2}$) und der Vorbeschichtungs-Dicke ($h_{1/3}$) auf Drittel der Breite, genommen ausgehend vom Rand des Wegnahme-Bereichs (7), und der Vorbeschichtungs-Dicke auf Halber-Breite ($h_{1/2}$) strikt größer als 0% und kleiner oder gleich 50% ist,
und wobei der Wegnahme-Bereich (7) am Umfang (6) des Blechs (1') angeordnet ist.

**26.** Blech (1', 1") gemäß Anspruch 25, wobei die Vorbeschichtungs-Schicht (5) aufweist eine Schicht aus einer intermetallischen Legierung (9), die von einer Schicht aus einer metallischen Legierung (11) überlagert ist.

**27.** Blech (1', 1") gemäß Anspruch 26, wobei der Wegnahme-Bereich (7) gänzlich von der Schicht aus metallischer Legierung (11) befreit ist.

**28.** Verfahren zur Herstellung eines Schweißrohlings, aufweisend die sukzessiven Schritte, gemäß welchen:

- man wenigstens zwei Bleche (1') gemäß irgendeinem der Ansprüche 25 oder 26 oder hergestellt gemäß dem Verfahren gemäß irgendeinem der Ansprüche 1 bis 22 und 24 bereitstellt,
- man dann diese beiden Bleche (1') auf Stoß verschweißt, wobei das Schweißverbinden an dem Rand (13) durchgeführt wird, welcher den Wegnahme-Bereich (7) aufweist.

**29.** Verfahren zur Herstellung gemäß Anspruch 28, wobei die beiden auf Stoß verschweißten Bleche (1') unterschiedliche Dicken haben.

**30.** Verfahren zur Herstellung eines warm-tiefgezogenen Bauteils, aufweisend die sukzessiven Schritte, gemäß welchen:

- man einen Schweißrohling bereitstellt, der erlangt ist durch das Verfahren gemäß Anspruch 28 oder gemäß Anspruch 29,
- man dann den Schweißrohling erwärmt, um den Substraten (3) der Bleche (1), welche den Schweißrohling bilden, eine teilweise oder gänzlich austenitische Struktur zu verleihen,
- man dann den Schweißrohling warm-tiefzieht zum Erlangen eines warm-tiefgezogenen Bauteils,
- man das Bauteil abkühlt mit einer Geschwindigkeit, die geeignet ist, um diesem die vorgesehenen mechanischen Eigenschaften zu verleihen.

**31.** Verfahren gemäß Anspruch 30, wobei die Abkühlgeschwindigkeit größer ist als die kritische Martensitische-Abschreckung-Geschwindigkeit des Stahls des Substrats (3) der wenigstens zwei Bleche (1') oder des Stahls des Substrats (3) des wenigstens eines Blechs (1").

**Claims**

**1.** A method for preparing a pre-coated metal sheet (1'; 1") for welding thereof to another pre-coated metal sheet, comprising the following successive steps:

- providing a pre-coated metal sheet (1) comprising a metal substrate (3) provided, on at least one of its faces (10), with a pre-coating layer (5), then
- removing, on at least one face (10) of said pre-coated metal sheet (1), at least part of said pre-coating layer (5) so as to form a removal zone (7), said removal being done by the impact of a laser beam (15) on said pre-coating layer (5), the removal step comprising, over the course of the removal, the relative displacement of said laser beam (15) with respect to the metal sheet (1) in a direction of advance (A),

**characterized in that** during the removal, the laser beam (15) is inclined relative to the face (10) of the metal sheet (1) such that the orthogonal projection of the laser beam (15) on said face (10) of the metal sheet (1) is located in the zone of the metal sheet (1) in which the removal has already been done, and **in that** it forms an angle of inclination ($\alpha$) comprised between 12° and 50° with the direction normal (N) to the face (10) of the metal sheet (1).

2. The method according to claim 1, wherein the pre-coating layer (5) is a layer of aluminum, an aluminum-based layer or a layer of aluminum alloy.

3. The method according to any one of claims 1 or 2, wherein the pre-coating layer (5) is a layer of aluminum alloy further comprising silicon.

4. The method according to any one of claims 1 to 3, wherein the angle of inclination ($\alpha$) of the laser beam (15) is comprised between 15° and 45°.

5. The method according to any one of claims 1 to 4, wherein the angle of inclination ($\alpha$) of the laser beam (15) is comprised between 20° and 40°.

6. The method according to any one of claims 1 to 5, wherein the angle of inclination ($\alpha$) of the laser beam (15) is comprised between 25° and 40°.

7. The method according to any one of claims 1 to 6, wherein the angle of inclination ($\alpha$) of the laser beam (15) is comprised between 25° and 35°.

8. The method according to any one of claims 1 to 7, wherein the laser beam (15) is a pulsed laser beam.

9. The method according to any one of claims 1 to 8, wherein the pre-coating layer (5) comprises a layer of intermetallic alloy (9) topped by a layer of metal alloy (11).

10. The method according to claim 9, wherein the removal zone (7) is completely free of the layer of metal alloy (11).

11. The method according to any one of claims 1 to 10, wherein the removal zone (7) is formed on a lower face (10) of the metal sheet (1).

12. The method according to any one of claims 1 to 11, wherein a removal zone (7) is formed simultaneously on a lower face (10) and on an upper face (10) of the metal sheet (1).

13. The method according to any one of the preceding claims, wherein the removal is done without suction.

14. The method according to any one of the preceding claims, wherein the removal is done without gas blowing.

15. The method according to any one of the preceding claims, wherein, during the removal step, the distance between the output lens of the laser head (17) and the metal sheet (1) is greater than or equal to 150 mm, and in particular comprised between 150 mm and 250 mm.

16. The method according to any one of claims 1 to 15, wherein the metal substrate (3) is made up of steel.

17. The method according to claim 16, wherein the steel of the substrate (3) comprises, by weight:

$0.10\% \leq C \leq 0.5\%$
$0.5 \leq Mn \leq 3\%$
$0.1 \leq Si \leq 1\%$
$0.01 \leq Si \leq 1\%$
$Ti \leq 0.2\%$
$Al \leq 0.1\%$
$S \leq 0.05\%$
$P \leq 0.1\%$
$B \leq 0.010\%$

the rest being iron and impurities from smelting.

18. The method according to claim 16, wherein the steel of the substrate (3) comprises, by weight:

$0.15\% \leq C \leq 0.25\%$
$0.8 \leq Mn \leq 1.8\%$
$0.1\% \leq Si \leq 0.35\%$
$0.01 \leq Cr \leq 0.5\%$
$Ti \leq 0.1\%$
$Al \leq 0.1\%$
$S \leq 0.05\%$
$P \leq 0.1\%$
$B \leq 0.005\%$

the rest being being iron and impurities from smelting .

19. The method according to claim 16, wherein the steel of the substrate (3) comprises, by weight:

$0.040\% \leq C \leq 0.100\%$
$0.80 \leq Mn \leq 2.00\%$
$Si \leq 0.30\%$
$S \leq 0.005\%$
$P \leq 0.030\%$
$0.010\% \leq Al \leq 0.070\%$
$0.015\% \leq Nb \leq 0.100\%$
$Ti \leq 0.080\%$
$N \leq 0.009\%$
$Cu \leq 0.100\%$
$Ni \leq 0.100\%$
$Cr \leq 0.100\%$
$Mo \leq 0.100\%$
$Ca \leq 0.006\%$,

the rest being iron and impurities from smelting.

20. The method according to any one of claims 16 to 19, wherein the microstructure of said steel is ferrito-pearlitic.

21. The method according to any one of claims 1 to 20, wherein, during the provision step, two pre-coated metal sheets (1) are supplied and they are arranged side by side, leaving a predetermined gap between the two pre-coated metal sheets (1), then, during the removal step, at least part of the pre-coating layer (5) is simultaneously removed from each of the two metal sheets (1) in order to simultaneously form a removal zone (7) on each of said metal sheets (1), the laser beam (15) being arranged overlapping the two metal sheets (1) during the removal step.

22. The method according to any one of claims 1 to 21, wherein the removal zone (7) is located at the periphery (6) of the metal sheet (1).

23. The method according to any one of claims 1 to 21, wherein the removal zone (7) is not completely adjacent to the edge (13) of the metal sheet (1).

24. The method according to claim 23, further comprising, after the removal step to form the removal zone (7), cutting of the metal sheet (1") along a plane (20) so as to form a metal sheet (1') comprising, at its periphery, a zone (7) free of at least part of the pre-coating layer (5).

25. A metal sheet (1', 1") comprising a metal substrate (3) bearing, on at least one of its faces (10), a pre-coating layer (5), the metal sheet (1') comprising, on said at least one face (10), a removal zone (7) where the pre-coating layer (5) has been removed over part of its thickness, **characterized in that**, in the removal zone (7), the relative variation $\Delta$, considered along the width of the removal zone (7), of the thickness of the part of the pre-coating layer (5) remaining in the removal zone (7), defined by the ratio of the difference between the pre-coating thickness at half-width ($h_{1/2}$) and the pre-coating thickness ($h_{1/3}$) at one third of the width considered from the edge of the removal zone (7) to the thickness of the pre-coating at half-width ($h_{1/2}$) is strictly greater than 0% and less than or equal to 50%, and wherein the removal zone (7) is located at the periphery (6) of the metal sheet (1').

26. The metal sheet (1', 1") according to claim 25, wherein the pre-coating layer (5) comprises a layer of intermetallic alloy (9) topped by a layer of metal alloy (11).

27. The metal sheet (1', 1") according to claim 26, wherein the removal zone (7) is completely free of the layer of metal alloy (11).

28. A method for manufacturing a welded blank, comprising the following successive steps:

    - providing at least two metal sheets (1') according to any one of claims 25 or 26 or manufactured according to the method according to any one of claims 1 to 22 and 24, then
    - butt welding these two metal sheets (1'), the welded connection being done on the edge (13) comprising the removal zone (7).

29. The method according to claim 28, wherein the two butt welded metal sheets (1') have different thicknesses.

30. A method for manufacturing a hot pressed part comprising the following successive steps:

    - providing a welded blank obtained using the method according to claim 28 or according to claim 29, then
    - heating said welded blank so as to impart a partially or fully austenitic structure to the substrates (3) of the metal sheets (1) making up said blank, then
    - hot press-forming said blank to obtain a hot pressed part;
    - cooling the part with a speed able to give it targeted mechanical properties.

31. The method according to claim 30, wherein the cooling speed is greater than the critical martensitic quenching speed of the steel of the substrate (3) of said at least two metal sheets (1') or the steel of the substrate (3) of said at least one metal sheet (1").

Fig.1

Fig.2

Fig.3

Fig.4

Fig.5

Fig.6

Fig.7

EP 3 393 706 B1

**EP 3 393 706 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2007545 A
- KR 101346317
- WO 2015162478 A1
- JP H0839279 A
- US 5662762 A